# EUROPEAN PATENT SPECIFICATION

(11) **EP 4 042 312 B1**
(45) Date of publication and mention of the grant of the patent: **11.10.2023**
(21) Application number: 20811789.5
(22) Date of filing: 26.10.2020
(51) Int. Cl.: G06F 21/64, H04L 9/32, H04L 9/40

(54) **MULTI-RECIPIENT SECURE COMMUNICATION**
SICHERE KOMMUNIKATION MIT MEHREREN EMPFÄNGERN
COMMUNICATION SÉCURISÉE À MULTIPLES DESTINATAIRES

(43) Date of publication of application: 17.08.2022
(73) Proprietor: Google LLC, Mountain View, CA 94043 (US)
(72) Inventor: WANG, Gang, Mountain View, California 94043 (US); JACOBSON, Alex Daniel, Mountain View, California 94043 (US)
(74) Representative: Kilburn & Strode LLP
(86) International application number: PCT/US2020/057291
(87) International publication number: WO 2022/093164

(56) References cited:
- US-A1- 2005 039 016
- FEDORKOW G ET AL: "TPM-based Network Device Remote Integrity Verification; draft-ietf-rats-tpm-based-network-device-a ttest-02.txt", TPM-BASED NETWORK DEVICE REMOTE INTEGRITY VERIFICATION; DRAFT-IETF-RATS-TPM-BASED-NETWORK-DEVICE-A TTEST-02.TXT; INTERNET-DRAFT: RATS WORKING GROUP, INTERNET ENGINEERING TASK FORCE, IETF; STANDARDWORKI , no. 2 13 July 2020 (2020-07-13), pages 1-38, XP015140736, Retrieved from the Internet: URL:https://tools.ietf.org/html/draft-ietf -rats-tpm-based-network-device-attest-02 [retrieved on 2020-07-13]

## Description

### TECHNICAL FIELD

This specification relates to data security and cryptography.

### BACKGROUND

Client devices transmit requests and other data over public networks, such as the Internet. These communications can be altered by other parties, such as parties that intercept the communications and/or intermediaries that receive the communications and forward them to other parties. Client devices are also subject to malicious attacks, such as viruses and malware that can send fraudulent requests without the user's knowledge or authorization. In addition, other parties can emulate a client device to send requests that appear to originate from the client device, but actually come from a device of the other parties.

US 2005/039016 A1 (AISSI SELIM [US] ET AL) describes "[a] method for trusted package digital signature based on secure, platform-bound identity credentials. The selection of a document to be electronically signed by a user via a computing device is made. A hash for the document is determined. The hash is encrypted with a private key of the user to create a digital signature. The document, an identification credential, and the digital signature are sent to a recipient computing device residing on a network. The identification credential comprises a digital file used to cryptographically bind a public key to specific trusted hardware attributes attesting to the identity and integrity of the trusted computing device. The trusted computing device includes a cryptographic processor."

### SUMMARY

In general, one innovative aspect of the subject matter described in this specification can be embodied in methods that include receiving, by a recipient device of a given recipient and from a client device, a communication comprising an attestation token and one or more attachment elements. The attestation token includes a set of data and a digital signature of the set of data. Each attachment element includes recipient data for a respective recipient of the communication and a binding that cryptographically binds the attachment element to the attestation token. The methods can include verifying, by the recipient device, integrity of the communication using the attestation token and a given attachment element for the given recipient, including verifying, by the recipient device, integrity of the given attachment element, comprising determining, based on the binding of the given attachment element, that the attachment element is bound to the attestation token and verifying, by the recipient device, integrity of the attestation token comprising determining, based on the set of data, that the digital signature is valid. The methods can include responding to the communication in response to verifying the integrity of communication. Other implementations of this aspect include corresponding apparatus, systems, and computer programs, configured to perform the aspects of the methods, encoded on computer storage devices.

These and other implementations can each optionally include one or more of the following features. In some aspects, the binding includes a hash value of the digital signature computed using a cryptographic hash function and the digital signature of the attestation token. Verifying the given attachment element can include computing a verification hash value using the cryptographic hash function and the digital signature of the attestation token and determining that the verification hash value matches the hash value of the binding.

In some aspects, the binding includes a hash value of the attestation token computed using a cryptographic hash function and the attestation token. Verifying the given attachment element can include computing a verification hash value using the cryptographic hash function and the attestation token and determining that the verification hash value matches the hash value of the binding.

In some aspects, the given attachment element includes a resource locator for the given recipient and an attachment element digital signature generated using (i) a private key of the client device and (ii) a combination of the binding of the given attachment element, the recipient data of the given attachment element, and the resource locator.

In some aspects, verifying the given attachment element includes verifying the attachment element digital signature using a public key corresponding to the private key and the combination of the binding of the given attachment element, the recipient data of the given attachment element, and the resource locator.

In some aspects, the recipient data for each recipient is encrypted by a software component of the recipient included in an application running on the client device. The attestation token can include a token creation timestamp indicating a time at which the attestation token was created. Verifying the integrity of the attestation token can include determining that the time at which the attestation was created is within a threshold duration of a time at which the communication was received.

In some aspects, the attestation token includes a public key of the client device. The digital signature is generated using a private key of the client device that corresponds to the public key of the client device. Determining that the digital signature is valid can include verifying the digital signature using the public key and the set of data.

In some aspects, the set of data includes an integrity token that includes a verdict indicating whether the client device or an application running on the client device is trusted. Verifying the attestation token can include determining that the verdict indicates that the client device or the application running on the client device is trusted. The recipient device can receive only the attachment element for the given recipient.

The subject matter described in this specification can be implemented in particular embodiments so as to realize one or more of the following advantages. Using attestation tokens to transmit data from client devices provides a secure communication channel between the client devices and the computers or other devices of recipients. Including, with the attestation token, a digital signature generated based on the data included in the attestation token enables the recipients to verify that the data in the attestation token was not modified after the attestation token was created, e.g., during transmission between the client device and the recipient. The inclusion of a token creation time in the attestation token enables recipients to detect replay attacks and/or falsified data transmissions.

The attestation token can also include one or more integrity tokens that indicate whether the client device transmitting the attestation token and/or the application running on the client device that initiated the transmission is trustworthy. This enables the recipient(s) of the attestation token to verify that the data came from a trusted client device, e.g., rather than from an emulator or a compromised device. The integrity token(s) can be generated and digitally signed by a trusted analyzer (e.g., a third-party analyzer) so that recipients of the attestation token can verify that the client device was evaluated by a trusted analyzer and that the data in the integrity token was not modified after creation by the trusted analyzer.

The attestation token can be transmitted with one or more attachment elements that are respectively for one or more recipients and each attachment element can include data, e.g., encrypted data, for its recipient. By including attachment elements as separate data structures with the attestation token rather than including the data for each entity within the attestation token, the attachment elements can be removed from the overall message or other electronic communication without affecting the ability of the recipients to verify the attestation token. This enables one of the recipients to receive the attestation token and all of the attachment elements and forward, for each other recipient only the attachment element for that recipient with the attestation token. Compared to implementations in which the data for all of the recipients is included in the attestation token, this separation reduces the amount of data sent to each recipient, which reduces bandwidth consumption, reduces data storage requirements to store the attestation tokens, and reduces the latency in transmitting the attestation tokens over a network.

In addition, this reduces the processing power and computational resources (e.g., CPU cycles) required to verify the attestation tokens. For example, if the data for each recipient was included in the attestation token, the recipient's device would be required to scan all of this data in addition to the other data of the attestation token to verify the digital signature of the attestation token. By generating an attachment element for each recipient, the device of each recipient only has to scan the other attestation data to verify the signature, e.g., without scanning data for each recipient. In addition, this better secures the data of each recipient by not providing the recipient's data to other recipients. Even if the data is encrypted in the attestation token, the encrypted data would be vulnerable to another entity that finds a way to decrypt the data.

Various features and advantages of the foregoing subject matter is described below with respect to the figures. Additional features and advantages are apparent from the subject matter described herein and the claims.

### BRIEF DESCRIPTION OF THE DRAWINGS

FIG. 1 is a block diagram of an environment that provides a secure channel for communications between client devices and multiple recipients.
FIG. 2 is a flow diagram that illustrates an example process for generating and transmitting a communication that includes an attestation token and attachment elements.
FIG. 3 is a flow diagram that illustrates an example process for verifying the integrity of a communication is valid and whether to respond to the communication.
FIG. 4 is a flow diagram that illustrates another example process for verifying the integrity of a communication using an attestation token and an attachment element.
FIG. 5 is a flow diagram that illustrates an example process for verifying the integrity of an attachment element.
FIG. 6 is a block diagram of an example computer system.

Like reference numbers and designations in the various drawings indicate like elements.

### DETAILED DESCRIPTION

In general, systems and techniques described in this document can provide a secure communication channel for electronic communications between a client device and multiple recipients. The client device can generate communications, e.g., electronic messages or requests, that include an attestation token that can be used by recipients of the communication to verify the authenticity and integrity of the communication. The attestation token can include a set of data and a digital signature that is generated based on the set of data. In this way, the recipient can verify that the set of data has not been modified, e.g., during transmission or by an intermediary, by verifying the digital signature using the received set of data and the sender's public key.

Some communications can be transmitted to multiple recipients and the data for each recipient can be different and/or sensitive. In such cases, including the recipient data in the attestation token can increase the data size of the communication that is sent to each recipient and subject the recipient data to other recipients. To reduce data size for each recipient and provide enhanced security of each recipient's data, recipient-specific data can be transmitted in the form of attachment elements that are in addition to the attestation token, but not part of the set of data of the attestation token used to generate the digital signature. In this way, the attachment elements that are not intended for a recipient can be removed from the communication without breaking the digital signature.

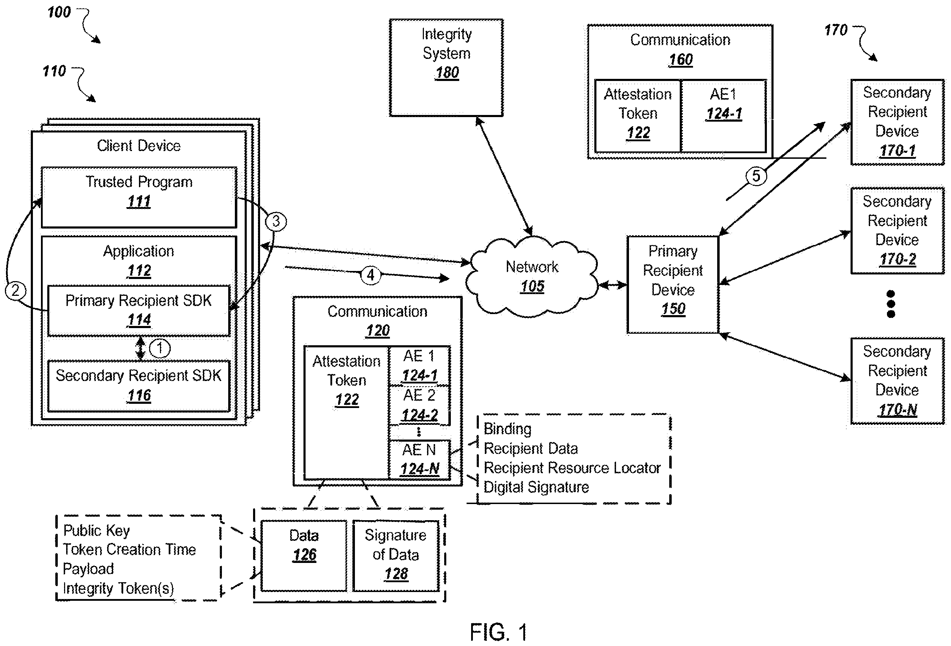

FIG. 1 is a block diagram of an environment 100 that provides a secure channel for communications between client devices and multiple recipients. The example environment 100 includes a data communication network 105, such as a local area network (LAN), a wide area network (WAN), the Internet, a mobile network, or a combination thereof. The network 105 connects client devices 110, a primary recipient device 150, secondary recipient devices 170, and an integrity system 180. The environment 100 can include many client devices 110, primary recipient devices 150, secondary recipient devices 170, and integrity systems 180.

The recipient devices 150 and 170 are devices, e.g., computers, of recipients of communications 120 transmitted by client devices 110. The types of recipients can vary depending on various use cases as the secure communication techniques described in this document can be applied to many different use cases. For example, the recipients can be entities that store and/or make use of user data of users of the client devices 110. In this example, the client devices 110 can transmit secure communications 120 to the primary recipient devices 150 to instruct the recipients on what data can be stored and how the data can be used.

In another example, the recipients can be entities to which applications running on the client devices 110 report events. For example, the recipient devices 150 and/or 170 can be aggregation servers that aggregate event data, determine metrics, e.g., statistics, and report the metrics.

In another example, the recipients are entities that distribute content, e.g., digital components, to the client devices 110. In this example, the primary recipient device 150 can be a supply-side platform (SSP) and the secondary recipients 170 can be demand-side platforms (DSPs). In general, an SSP is a technology platform implemented in hardware and/or software that automates the process of obtaining digital components for the resources and/or applications. A publisher of electronic resources (e.g., web pages) can use an SSP to manage the process of obtaining digital components for presentation with its electronic resources. In general, a DSP is a technology platform implemented in hardware and/or software that automates the process of distributing digital components for presentation with the resources and/or applications. A DSP can interact with multiple supply-side platforms SSPs on behalf of digital component providers to provide digital components for presentation with the resources and/or applications of multiple different publishers.

As used throughout this document, the phrase "digital component" refers to a discrete unit of digital content or digital information (e.g., a video clip, audio clip, multimedia clip, image, text, or another unit of content). A digital component can electronically be stored in a physical memory device as a single file or in a collection of files, and digital components can take the form of video files, audio files, multimedia files, image files, or text files and include advertising information, such that an advertisement is a type of digital component. For example, the digital component may be content that is intended to supplement content of a web page or other resource presented by the application 112. More specifically, the digital component may include digital content that is relevant to the resource content (e.g., the digital component may relate to the same topic as the web page content, or to a related topic). The provision of digital components can thus supplement, and generally enhance, the web page or application content.

A client device 110 is an electronic device that is capable of communicating over the network 105. Example client devices 110 include personal computers, mobile communication devices, e.g., smart phones, and other devices that can send and receive data over the network 105. A client device can also include a digital assistant device that accepts audio input through a microphone and outputs audio output through speakers. The digital assistant can be placed into listen mode (e.g., ready to accept audio input) when the digital assistant detects a "hotword" or "hotphrase" that activates the microphone to accept audio input. The digital assistant device can also include a camera and/or display to capture images and visually present information. The digital assistant can be implemented in different forms of hardware devices including, a wearable device (e.g., watch or glasses), a smart phone, a speaker device, a tablet device, or another hardware device. A client device can also include a digital media device, e.g., a streaming device that plugs into a television or other display to stream videos to the television.

A client device 110 typically includes applications 112, such as web browsers and/or native applications, to facilitate the sending and receiving of data over the network 105. A native application is an application developed for a particular platform or a particular device (e.g., mobile devices having a particular operating system). Publishers can develop and provide, e.g., make available for download, native applications to the client devices 110. A web browser can request a resource from a web server that hosts a website of a publisher, e.g., in response to the user of the client device 110 entering the resource address for the resource in an address bar of the web browser or selecting a link that references the resource address. Similarly, a native application can request application content from a remote server of a publisher.

An application 112 can generate and send communications 120 to recipients, e.g., the primary recipient device 150. The application 112 can interact with a trusted program 111 to generate an attestation token 122 and attachment elements 124 for a communication 120. The trusted program 111 can include trusted code from a reliable source that is difficult to falsify. For example, the trusted program 111 can be an operating system, a portion of an operating system, a web browser, etc. Generally, the trusted program 111 is difficult to infiltrate, and the amount of time and effort that a perpetrator would need to expend to tamper with the trusted program 111 is prohibitively high, e.g., not economically viable for the perpetrator. Additionally, because the trusted program 111 is provided and maintained by a reliable source, any vulnerabilities that arise can be addressed by the source.

The trusted program 111 can be local to client device 110. For example, the trusted program 111 can be a device driver of the operating system of client device 110. In some implementations, the trusted program 111 operates entirely locally to client device 110, reducing the need to transmit user information. In some implementations, the trusted program 111 can operate locally to client device 110 and over a network, such as network 105. For example, the trusted program 111 can be a web browser that is installed on client device 110 and transmits and receives information over the network 105.

The application 112 can include software modules, tools, interfaces, or other components that manage the generation and transmission of communications. In this example, the application 112 includes software development kits (SDKs) 114 and 116. Other software components, such as application programming interfaces (APIs) can also be used.

The application 112 includes a primary recipient SDK 114 that can be developed and distributed by the primary recipient corresponding to the primary recipient device 150. For example, an SSP can provide SDKs for inclusion in applications (e.g., native applications, web applications, web browsers, etc.). In this example, the primary recipient SDK 114 can generate, as communications 120, requests for digital components from the primary recipient device 150.

The application 112 also includes a respective secondary recipient SDK 116 for each of one or more secondary recipients having a secondary recipient device 170. The secondary recipient SDK 116 can obtain recipient data for inclusion in the communications sent by the primary recipient SDK 114 to the primary recipient device 150. As described in more detail below, the primary recipient device 150 can send the recipient data for each recipient to its corresponding secondary recipient device 170. An example process for generating and sending communications to the recipient devices 150 and 170 are illustrated as stages 1-5 in FIG. 1.

At stage 1, when the application 112 or its primary recipient SDK 114 is generating a communication 120 to send to the primary recipient device 150, the primary recipient SDK 114 obtains recipient data from one or more secondary recipient SDKs 116 corresponding to one or more recipients. The recipient data for each recipient can be data that is specific to that recipient and can vary based on the implementation. In an SSP and DSP example, the recipient data for a recipient device can include digital component selection signals for use in selecting digital components and/or fraud detection signals that can be used by the recipient to determine whether the client device 110 is operating as normal or trusted device. The fraud detection signals can include data representing operating characteristics or metrics of the client device that can be used to determine whether a client device is compromised or whether the client device is operating as a normal client device or an emulated client device. Certain operating characteristics and metrics are often different for genuine client devices relative to emulators. In some implementations, the fraud detection signals include application-level fraud detection signals that include operating characteristics and metrics of the application 112.

Each secondary recipient SDK 116 can collect its recipient data and provide the recipient data to the primary recipient SDK 114. In some implementations, each secondary recipient SDK 116 encrypts its recipient data prior to providing the recipient data to the primary recipient SDK 114. For example, each secondary recipient SDK 116 can encrypt its data using an encryption algorithm and public key such that other recipients, e.g., the primary recipient device 150 would not be able to access the plaintext value of the recipient data. Plaintext is text that is not computationally tagged, specially formatted, or written in code, or data, including binary files, in a form that can be viewed or used without requiring a key or other decryption device, or other decryption process. In other implementations, e.g., if the recipient data is not sensitive, the secondary recipient SDK 116 can send the plaintext recipient data to the primary recipient SDK 114. In some implementations, the trusted program 111 or the primary recipient SDK 114 can encrypt the recipient data for each recipient. Encrypted or not, the recipient data can be in the form of a byte array.

At stage 2, the primary recipient SDK 114 submits a request to the trusted program 111 to generate an attestation token 122 for the communication 120. The primary recipient SDK 114 can send, with the request, the recipient data received from each secondary recipient SDK 116 and, for each recipient, a resource locator for the recipient. The resource locator can act as a key for the recipient data and be in the form of the eTLD+1 of a domain of the recipient. The eTLD+1 is the effective top-level domain (eTLD) plus one level more than the public suffix. An example eTLD+1 is "example.com" where ".com" is the top-level domain.

This request can also include any payload data to be included in the attestation token 122, e.g., data that is common to all recipients, instructions for the recipients, etc. The primary recipient SDK 114 can generate the request using one or more API calls to the trusted program 111.

At stage 3, the trusted program 111 generates the attestation token 122 and an attachment element 124 for each recipient for which recipient data was received and provides the attestation token 122 and attachment elements 124 to the primary recipient SDK 114. The attestation token 122 can include a set of data 126 and a digital signature 128 of the set of data.

The set of data 126 can include a public key of the client device 110 (e.g., a public key of the application 112) sending the request, a token creation time that indicates a time at which the attestation token 122 is created, the payload data, and/or one or more integrity tokens provided by one or more integrity systems 180. This token creation time can be a high resolution timestamp (e.g., accurate to the second, to the millisecond, or to the microsecond).

The application 112 can generate and maintain one or more pairs of related encryption keys including a private key and a public key that corresponds to, and is mathematically linked to, the private key. In some implementations, the keys are provided to the application 112 from another application or device. Data that is digitally signed using the private key can only be verified using the corresponding public key. Similarly, data that is encrypted using the public key can only be decrypted using the private key. The encryption keys can be cycled periodically, per request, per application 112, etc. to prevent the public key from being used to track particular client devices 110, e.g., particular users of the client devices 110.

The trusted program 111 generates a digital signature 128 of the set of data 126 using the private key so that recipients can verify that the set of data 126 was not changed after it was generated by the trusted program and for proving that the request originated at the client device 110. In some implementations, the trusted program 111 uses an Elliptic Curve Digital Signature Algorithm (ECDSA) to generate the digital signature, but other signature techniques (e.g., RSA) can also be used. The corresponding public key is provided with the attestation token 122 so that the recipients of the attestation token 122 can use the public key to verify the digital signature 128 of the set of data 126. The trusted program 111 can generate the digital signature by signing over the set of data 126 using the private key.

The integrity tokens can include an application integrity token and/or a device integrity token. The application integrity token indicates that the application 112 has been evaluated by an integrity system 180 and has been deemed trusted by the integrity system 180. Similarly, the device integrity token indicates that the client device 110 has been evaluated by an integrity system 180 and has been deemed trusted by the integrity system 180. The integrity system 180 can evaluate the application 112 and/or client device 110 based on fraud detection signals obtained from the client device 110 and/or application 112, e.g., by an in-application component.

An integrity token can include a token creation time that indicates a time at which the integrity token was created, the public key included in the attestation token 122 (e.g., a device public key of the client device 110), the verdict (e.g., whether the application 112 or client device 110 is trusted), and/or a digital signature of the rest of the integrity token (e.g., the token creation time, the device public key, and/or the device/application verdict). Using a digital signature of the data including the public key binds the integrity token to the public key and therefore to the client device 110 and/or the application 112.

The digital signature of the integrity token can be generated by a private key owned and securely stored by the integrity system 180. The digital signature is publicly verifiable by a public key corresponding to the private key owned and securely stored by the integrity system 180. The use of the private and public keys of the integrity system 180 to digitally sign the integrity tokens and verify these digital signatures in combination with the private and public keys of the client device 110 to digitally sign the attestation token 122 and verify the signatures of the attestation tokens 122 provide a secure communication channel and establish a chain of trust between the entities of FIG. 1.

The attachment element 124 for a recipient can include a binding, the recipient data for the recipient, the resource locator for the recipient (e.g., the eTLD+1 for the recipient, as described above), and a digital signature generated based on the other data, e.g., based on the binding, the recipient data, and the resource locator. The binding cryptographically binds the attachment element 124 to the attestation token 122 so that the attachment element 124 cannot be sent with other attestation tokens 122 without being detected.

In some implementations, the binding is a cryptographic hash of the digital signature of the attestation token 122. For example, after generating the digital signature for the attestation token 122, the trusted program 111 can compute the cryptographic hash of the digital signature using a cryptographic function (e.g., SHA256). That is, the trusted program 111 can apply a cryptographic hash function to the digital signature of the attestation token 122. The trusted program 111 can also truncate the cryptographic hash to further reduce data size of the communication 120, e.g., by truncating the hash to 16 bytes. As described below, during verification of the attestation token 122 and the attachment elements 124, the recipient can verify the digital signature of the attestation token 122, calculate the hash of the digital signature included in a received attestation token and compare that hash to the binding. If the digital signature is verified successfully and the hash values do not match, then the attachment element 124 was not generated for that attestation token 122 and the verification of the attachment element 124 fails.

In some implementations, the binding can be a cryptographic hash of the attestation token 122 itself. However, this can require additional processing by the trusted program 111 relative to using the cryptographic hash of the digital signature, as the attestation token 122 will typically have a larger data size than the digital signature of the attestation token 122.

The digital signature of the attachment element 124 for a recipient can be generated using the same private key used to generate the digital signature of the attestation token 122. In this way, the recipient can use the public key to verify the digital signature of the attachment element 124. In other implementations, a different private key can be used to generate the digital signature for the attachment elements 124 and the corresponding public key can be included in the attestation token 122 or otherwise provided to the recipients.

At stage 4, the primary recipient SDK 114 generates and transmits the communication 120 to the primary recipient device 150 over the network 105. As shown in FIG. 1, the communication 120 can include one attestation token 122 for all recipients and, for each individual recipient, an attachment element 124. A communication 120 can include any number of attachment elements, e.g., zero or more attachment elements.

At stage 5, the primary recipient device 150 generates and transmits individual communications 160 to each secondary recipient device 170 to which the communication 120 is intended. Although not shown in FIG. 1, the individual communications 160 can also be transmitted over the network 105 or another network. The primary recipient device 150 can access the attachment elements 124 of the received communication 120 and identify the resource locator of each attachment element 124. This instructs the primary recipient device 150 where to send the attachment element 124.

For each attachment element 124 of the communication 120, the primary recipient device 150 can generate an individual communication 160 that includes the attestation token 122 and the attachment element 124. For example, the communication 160 for secondary recipient device 170-1 includes the attestation token 122 and the attachment element 124-1 for the recipient corresponding to the attachment element 124-1. The primary recipient device 150 can generate the individual communication 160 for a given recipient by removing the attachment elements for all of the other recipients.

As the digital signature of the attestation token 122 is not generated based on any of the attachment elements 124, each recipient can still verify the digital signature of the attestation token 122 even without receiving the other attachment elements for the other recipients. By removing the attachment elements 124 that are not for a given recipient and including the attestation token 122 and only the attachment element 124 for the given recipient in the communication 160, the data size of the communication 160 is substantially reduced. This reduces bandwidth consumption, reduces data storage at the secondary recipient devices 170, and requires less processing to verify the attestation token 122 and attachment element 124.

For example, if the communications 120 are related to user privacy settings or controls, the recipients can be required to store the attestation tokens 122 for a particular time period. If the attestation tokens 122 included the recipient data for multiple recipients rather than using attachment elements 124 for the individual recipients, the data storage requirements would be much greater. Verification of such attestation tokens that include the recipient data for multiple recipients would require substantially more processing to scan all of the recipient data to verify the digital signature. By using separate attachment elements for each recipient, the secondary recipient devices 170 can scan only the other data of the attestation token 122 and the individual attachment element 124 for that recipient, resulting in fewer CPU cycles per communication 160. Aggregated over thousands or millions of communications, e.g., per day, the computational and data storage savings are substantial.

This also enables the secondary recipient devices 170 to respond much faster to the communications 160, which is critical in implementations related to content, e.g., digital component, distribution. In such cases, a response is typically required within a few milliseconds. By reducing the processing needed for verification, the secondary recipient computing devices 170 can verify the integrity of the communications 160 and still provide responses within the time requirements.

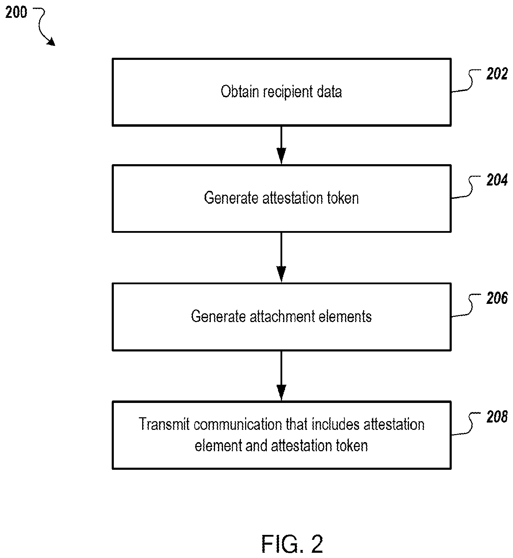

FIG. 2 is a flow diagram that illustrates an example process 200 for generating and transmitting a communication that includes an attestation token and attachment elements. Operations of the process 200 can be implemented, for example, by the client device 110 of FIG. 1. Operations of the process 200 can also be implemented as instructions stored on one or more computer readable media which may be non-transitory, and execution of the instructions by one or more data processing apparatus can cause the one or more data processing apparatus to perform the operations of the process 200.

Recipient data is obtained (202). An application 112 executing on a client device 110 can obtain recipient data for each one or more recipients of a communication being generated by the application 112. For example, as described above, a primary recipient SDK 114 can obtain recipient data for a recipient from a secondary recipient SDK 116 of the recipient. The recipient data for each recipient can be different from the recipient data for each other recipient. Each recipient's SDK can collect its data and provide the data to the primary recipient SDK 114.

An attestation token is generated (204). A trusted program 111 of the client device 110 can generate the attestation token in response to a request from the application 112. The request can include payload data for the communication, the recipient data for each recipient, and a resource locator (e.g., eTLD+1) for each recipient. As described above, the attestation token can include a set of data that includes a public key of the client device 110 or application 112, a token creation time, the payload data. The attestation token can also include a digital signature generated based on the set of data and using a private key that corresponds to the public key.

Attachment elements are generated (206). The trusted program 111 can generate an attachment element for each recipient using the recipient data for the recipient received in the request. As described above, the attachment element for a recipient can include a binding, the recipient data for the recipient, and the resource locator for the recipient. The attachment element for the recipient can also include a digital signature generated based on the binding, the recipient data for the recipient, and the resource locator for the recipient. The trusted program 111 can generate the digital signature for each attachment element using the private key used to sign the attestation token. For example, the trusted program 111 can generate the signature for an attachment element by signing over the binding, the recipient data, and the resource locator using the private key. As described above, the binding for each attachment element can be a cryptographic hash of the digital signature of the attestation token to bind all of the attachment elements to the attestation token.

The communication is transmitted (208). The application 112 can transmit a communication that includes the attestation token and the attachment elements to a recipient, e.g., over a network. As described above, a primary recipient, e.g., a first recipient or intermediary, can receive the communication and generate individual communications for each intended recipient of the communication. The individual communications can each include the attestation token and a single attachment element for the recipient of the individual communication. In another example, the application 112 can generate and send individual communications that each include the attestation token and an attachment element for a recipient of the individual communication.

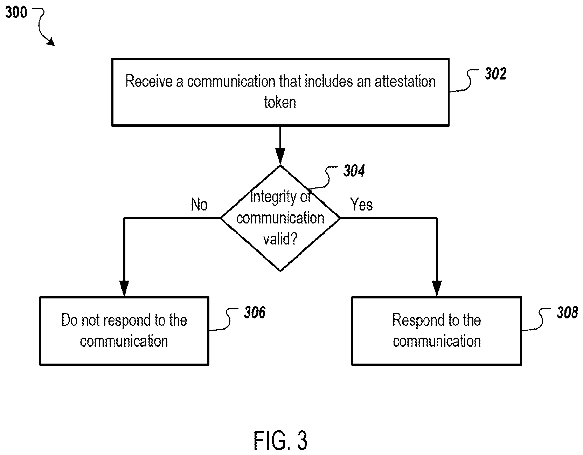

FIG. 3 is a flow diagram that illustrates an example process 300 for verifying the integrity of a communication is valid and whether to respond to the communication. Operations of the process 300 can be implemented, for example, by a recipient device 150 or 170 of FIG. 1. Operations of the process 300 can also be implemented as instructions stored on one or more computer readable media which may be non-transitory, and execution of the instructions by one or more data processing apparatus can cause the one or more data processing apparatus to perform the operations of the process 300.

A communication is received (302). The communication can include an attestation token and an attachment element. For example, a recipient device can receive the communication from a client device 110 or primary recipient device 150.

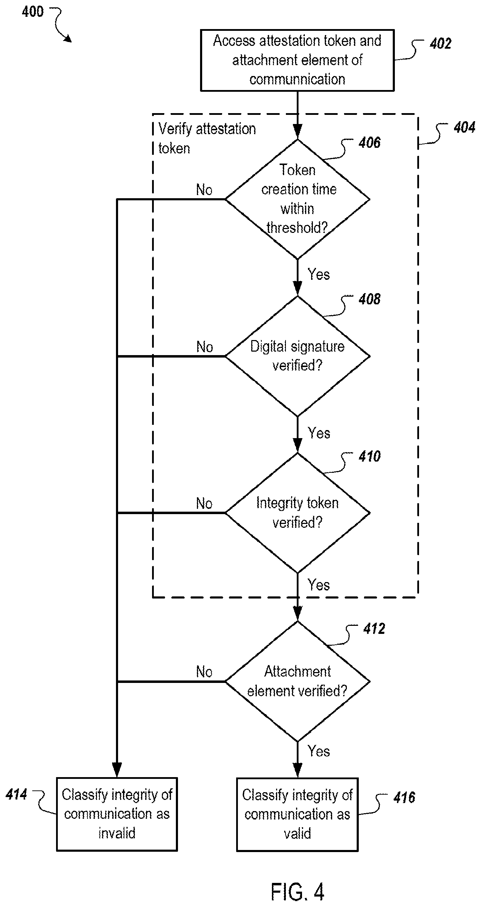

The integrity of the communication is verified (304). For example, the recipient device can classify the integrity as being valid or invalid based on an attempt to verify the communication. This verification can include verifying the attestation token and the attachment element. The integrity of the request can be invalid if any data in the set of data changed between the time at which the attestation token was created, a duration of time between the token creation time and the time at which the request was received exceeds a threshold, the integrity token is invalid, or the attachment element is not bound to the attestation token. An example process for verifying the integrity of a communication is illustrated in FIG. 4 and described below.

If the integrity of the communication is classified as invalid, e.g., verification fails, the recipient device does not respond to the communication (306). For example, the recipient device can ignore the communication, delete the communication, or otherwise not take the requested action of the communication.

If the integrity of the communication is classified as valid, e.g., the verification succeeds, the recipient device responds to the communication (308). For example, if the communication is to update user privacy settings, the recipient device can update the user privacy settings in response to successfully verifying the communication. If the communication is a request for a digital component, the recipient device can select a digital component and provide data for the digital component in response to successfully verifying the communication. Thus, the response can vary based on the implementation and the data of the communication.

FIG. 4 is a flow diagram that illustrates another example process 400 for verifying the integrity of a communication using an attestation token and an attachment element. Operations of the process 400 can be implemented, for example, by a recipient device 150 or 170 of FIG. 1. Operations of the process 400 can also be implemented as instructions stored on one or more computer readable media which may be non-transitory, and execution of the instructions by one or more data processing apparatus can cause the one or more data processing apparatus to perform the operations of the process 400.

An attestation token and an attachment element of a communication are accessed (402). A recipient device can receive the communication and identify the attestation token and the attachment element in the communication. The recipient device can extract the attestation token and the attachment element from the communication.

The attestation token is verified (404). The recipient device can verify the attestation token using the token creation time, the digital signature, and/or the integrity token(s) included in the attestation token. In this implementation, all three verifications are performed using constituent operations 406-410, but fewer verifications can be performed in other implementations. In addition, the verifications can be performed in different orders or in parallel.

The token creation time of the attestation token is verified (406). As described above, the attestation tokens can include a token creation timestamp that indicates a time at which the attestation token was created. The token creation time can be used to determine whether a communication that includes the attestation token is a new or recent request. For example, the recipient device can compare the token creation time to a current time or a time at which the attestation token was received to determine whether the token creation time is within a threshold duration of the time at which the communication was received. If so, the token creation time is verified. If not, the attestation token is considered stale and, in response, the recipient device can classify the integrity of the communication as being invalid (414). The threshold duration can be, for example, one day, three days, one week, or another appropriate duration.

The token creation time can also be used to detect replay attacks. For example, if multiple requests having the same set of data, including the same token creation time, are received, the recipient can determine that the communications are duplicates and/or that the requests are part of a replay attack.

If the token creation time is verified successfully, the digital signature is verified (408). The digital signature can be verified to ensure that the set of data of the attestation token has not changed since the attestation token was created. For example, even a minor change to the set of data would result in verification of the digital signature failing. The recipient device can attempt to verify the digital signature using the set of data of the received attestation token and the public key included in the attestation token. If the digital signature cannot be verified using the public key, a determination can be made that the data in the set of data has been modified. For example, such data may have been modified by an entity that intercepted the request or an intermediary. If the digital signature is verified using the public key, a determination can be made that the data in the set of data of the attestation token has not been modified. If the digital signature is not verified successfully, the recipient device can classify the integrity of the communication as being invalid (414).

If the digital signature is verified successfully, the integrity token is verified (410). As described above, an integrity token can include a token creation time that indicates a time at which the integrity token was created, the public key of the client device 110 that requested the integrity token, the verdict (e.g., whether the application 112 or client device 110 is trusted), and/or a digital signature of the rest of the integrity token (e.g., the token creation time, the public key, and/or the verdict. The digital signature of the integrity token can be generated by a private key owned and securely stored by the integrity system 180. The digital signature is publicly verifiable by a public key corresponding to the private key owned and securely stored by the integrity system 180.

To verify integrity token, the recipient device can determine whether the verdict of the integrity token is valid, whether the public key of the integrity token matches the public key of the attestation token, and whether the token creation time of the integrity token is within a threshold duration of the time at which the communication was received. If the verdict indicates that the client device or application is not trusted, the public keys do not match, or the token creation time of the integrity token is not within the threshold duration of the time at which the communication was received, a determination is made that the integrity token is invalid and the integrity of the request is classified as invalid (414). If the verdict indicates that the client device or application is trusted and the public keys match, a determination can be made that the integrity token in valid.

This determination can also include verifying the digital signature of the integrity token. As described above, the integrity system 180 can digitally sign the data of the integrity token using a private key of the integrity system. The integrity system 180 can provide a public key that corresponds to this private key to recipients that may receive integrity tokens generated by the integrity system. Each recipient of the request can use this public key to verify the digital signature of the integrity token which, if successful, indicates that the data of the integrity token has not been modified since it was created. In this example, if the verdict is trusted, the public keys match, and the digital signature of the integrity token is verified successfully, a determination can be made that the integrity token in valid. If one or more verifications fail, the recipient device can classify the integrity of the integrity token as invalid.

If the token creation time, the digital signature of the attestation token, and the integrity token are all verified successfully, the recipient device can classify the integrity of the attestation token as valid and verify the attachment element (412). If any of the verifications fail, the recipient device can classify the integrity of the communication as invalid (414).

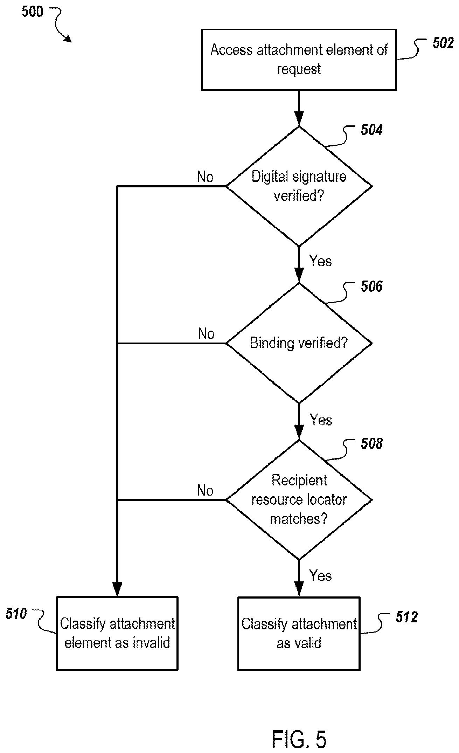

The recipient device can verify the attachment element by verifying the digital signature of the attachment element, verifying the binding, and verifying that the resource locator of the attachment element matches a resource locator of the recipient. An example process for verifying an attachment element is illustrated in FIG. 5 and described below.

The recipient device can verify the attestation token and the attachment element in any order, or in parallel. If both are verified successfully, the recipient device can classify the communication as valid (416). In turn, the recipient device can respond to the communication, as described above.

FIG. 5 is a flow diagram that illustrates an example process 500 for verifying the integrity of an attachment element. Operations of the process 500 can be implemented, for example, by a recipient device 150 or 170 of FIG. 1. Operations of the process 500 can also be implemented as instructions stored on one or more computer readable media which may be non-transitory, and execution of the instructions by one or more data processing apparatus can cause the one or more data processing apparatus to perform the operations of the process 500.

An attachment element is accessed (502). For example, the recipient device can extract the attachment element from a received communication that includes an attestation token and the attachment element, as described above. The attachment element for a recipient can include a binding, the recipient data for the recipient, the resource locator for the recipient (e.g., the eTLD+1 for the recipient), and a digital signature generated based on the other data, e.g., based on the binding, the recipient data, and the resource locator.

The recipient device verifies the digital signature (504). The digital signature can be verified to ensure that the data of the attachment element has not changed since the attachment element was created. For example, even a minor change to the data in the attachment element would result in verification of the digital signature failing. The recipient device can attempt to verify the digital signature of the attachment element using the set of data of the received attachment element and the public key included in the attestation token. If the digital signature cannot be verified using the public key, a determination can be made that the data in the set of data has been modified. For example, such data may have been modified by an entity that intercepted the request or an intermediary. If the digital signature is verified using the public key, a determination can be made that the data in the attachment element has not been modified. If the digital signature is not verified successfully, the recipient device can classify the attachment element as being invalid (510).

If the digital signature is verified successfully, the recipient device verifies the binding (506). The binding of an attachment element can be a hash value of the digital signature of the attestation token computed using a cryptographic hash function and the digital signature of the attestation token. In this way, the attachment element has to be received in a communication that includes the attestation token to which the attachment element is bound in order for this verification to succeed.

To verify the binding, the recipient device can compute a verification hash value using the same cryptographic hash function used to generate the binding and the digital signature included in the received attestation token. The recipient device can then compare this verification hash value to the hash value of the binding. If these two hash values do not match, then the recipient device can determine that the digital signature in the received attestation token is not the digital signature used to create the binding. In turn, the recipient device can determine that the attachment element is not bound to the attestation token and classify the attachment element as invalid (510).

For example, a malicious entity may attempt to include the attachment element in a different attestation token than the attestation token for which the attachment element was created. In this example, the digital signature of the malicious entity's attestation token would not match the digital signature of the valid attestation token and thus, the verification of the binding would fail. This ensures that the attachment element is only used with its correct attestation token.

In some implementations, the binding is a hash value of the attestation token computed using a cryptographic hash function and the received attestation token. In this example, verifying the attachment element can include computing a verification hash value using the cryptographic hash function and the attestation token and determining that the verification hash value matches the hash value of the binding.

In either example, if the hash value of the binding matches the verification hash value, the recipient device can verify the resource locator of the attachment element (508). The recipient device can determine whether the resource locator of the attachment element matches a resource locator of the recipient. That is, the recipient device can ensure that the attachment element was intended for the recipient based on the resource locator in the attachment element. If the resource locator in the attachment element does not match a resource locator of the recipient, the recipient device can classify the attachment element as being invalid (510).

If the digital signature of the attachment element, the binding of the attachment element, and the resource locator of the attachment element are all verified successfully, the recipient device can classify the integrity of the attachment element as valid (512). If any of the verifications fail, the recipient device can classify the integrity of the attachment element as invalid (510). The recipient device can perform the verifications in any order or in parallel.

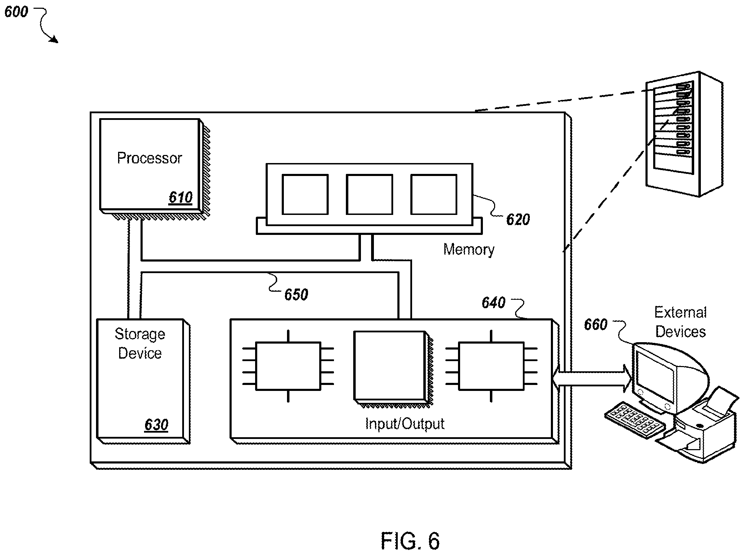

FIG. 6 is a block diagram of an example computer system 600 that can be used to perform operations described above. The system 600 includes a processor 610, a memory 620, a storage device 630, and an input/output device 640. Each of the components 610, 620, 630, and 640 can be interconnected, for example, using a system bus 650. The processor 610 is capable of processing instructions for execution within the system 600. In some implementations, the processor 610 is a single-threaded processor. In another implementation, the processor 610 is a multi-threaded processor. The processor 610 is capable of processing instructions stored in the memory 620 or on the storage device 630.

The memory 620 stores information within the system 600. In one implementation, the memory 620 is a computer-readable medium. In some implementations, the memory 620 is a volatile memory unit. In another implementation, the memory 620 is a non-volatile memory unit.

The storage device 630 is capable of providing mass storage for the system 600. In some implementations, the storage device 630 is a computer-readable medium. In various different implementations, the storage device 630 can include, for example, a hard disk device, an optical disk device, a storage device that is shared over a network by multiple computing devices (e.g., a cloud storage device), or some other large capacity storage device.

The input/output device 640 provides input/output operations for the system 600. In some implementations, the input/output device 640 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to external devices 660, e.g., keyboard, printer and display devices. Other implementations, however, can also be used, such as mobile computing devices, mobile communication devices, set-top box television client devices, etc.

Although an example processing system has been described in FIG. 6, implementations of the subject matter and the functional operations described in this specification can be implemented in other types of digital electronic circuitry, or in computer software, firmware, or hardware, including the structures disclosed in this specification and their structural equivalents, or in combinations of one or more of them.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage media (or medium) for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well, for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an internetwork (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method comprising:
receiving, by a recipient device of a given recipient and from a client device (110), a communication (120) comprising an attestation token (122) and one or more attachment elements (124), wherein:
the attestation token (122) comprises:
a set of data (126); and
a digital signature (128) of the set of data (126); and
each attachment element (124) comprises:
recipient data for a respective recipient of the communication; and
a binding that cryptographically binds the attachment element (124) to the attestation token (122);
verifying, by the recipient device, integrity of the communication using the attestation token (122) and a given attachment element (124) for the given recipient, comprising:
verifying, by the recipient device, integrity of the given attachment element (124), comprising determining, based on the binding of the given attachment element (124), that the attachment element (124) is bound to the attestation token (122); and
verifying, by the recipient device, integrity of the attestation token (122) comprising determining, based on the set of data (126), that the digital signature (128) is valid; and
responding to the communication in response to verifying the integrity of communication.

2. The computer-implemented method of claim 1, wherein:
the binding comprises a hash value of the digital signature (128) computed using a cryptographic hash function and the digital signature (128) of the attestation token (122); and
verifying the given attachment element comprises:
computing a verification hash value using the cryptographic hash function and the digital signature (128) of the attestation token (122); and
determining that the verification hash value matches the hash value of the binding.

3. The computer-implemented method of claim 1, wherein:
the binding comprises a hash value of the attestation token (122) computed using a cryptographic hash function and the attestation token (122); and
verifying the given attachment element (124) comprises:
computing a verification hash value using the cryptographic hash function and the attestation token (122); and
determining that the verification hash value matches the hash value of the binding.

4. The computer-implemented method of claim 1, wherein the given attachment element (124) further comprises a resource locator for the given recipient and an attachment element digital signature generated using (i) a private key of the client device (110) and (ii) a combination of the binding of the given attachment element (124), the recipient data of the given attachment element (124), and the resource locator.

5. The computer-implemented method of any preceding claim, wherein verifying the given attachment element (124) comprises verifying the attachment element digital signature using a public key corresponding to the private key and the combination of the binding of the given attachment element (124), the recipient data of the given attachment element (124), and the resource locator.

6. The computer-implemented method of any preceding claim, wherein the recipient data for each recipient is encrypted by a software component of the recipient included in an application (112) running on the client device (110).

7. The computer-implemented method of any preceding claim, wherein:
the attestation token (122) comprises a token creation timestamp indicating a time at which the attestation token (122) was created; and
verifying the integrity of the attestation token (122) comprises determining that the time at which the attestation was created is within a threshold duration of a time at which the communication was received.

8. The computer-implemented method of any preceding claim, wherein:
the attestation token (122) comprises a public key of the client device (110);
the digital signature is generated using a private key of the client device (110) that corresponds to the public key of the client device (110); and
determining that the digital signature is valid comprises verifying the digital signature using the public key and the set of data (126).

9. The computer-implemented method of any preceding claim, wherein:
the set of data (126) further comprises an integrity token comprising a verdict indicating whether the client device (110) or an application (112) running on the client device (110) is trusted; and
verifying the attestation token (122) further comprises determining that the verdict indicates that the client device (110) or the application (112) running on the client device (110) is trusted.

10. The computer-implemented method of claim 1, wherein the recipient device receives only the attachment element (124) for the given recipient.

11. A system (600) comprising:
one or more processors (610); and
one or more storage devices (630) storing instructions that, when executed by the one or more processors (610), cause the one or more processor (610) to carry out the method of any preceding claim.

12. A computer readable storage medium carrying instructions that, when executed by one or more processors (610), cause the one or more processors (610) to carry out the method of any one of claims 1 to 10.

13. A computer program product comprising instructions which, when executed by a computer, cause the computer to carry out the steps of the method of any of claims 1 to 10.

## Patentansprüche

1. Computerimplementiertes Verfahren, umfassend:
Empfangen, durch eine Empfängervorrichtung eines gegebenen Empfängers und von einer Client-Vorrichtung (110), einer Kommunikation (120), die ein Attestierungstoken (122) und ein oder mehrere Anhangselemente (124) umfasst, wobei:
das Attestierungstoken (122) Folgendes umfasst:
einen Datensatz (126); und
eine digitale Signatur (128) des Datensatzes (126); und
jedes Anhangselement (124) Folgendes umfasst:
Empfängerdaten für einen jeweiligen Empfänger der Kommunikation; und
eine Bindung, die das Anhangselement (124) kryptografisch an das Attestierungstoken (122) bindet;
Verifizieren, durch die Empfängervorrichtung, von Integrität der Kommunikation unter Verwendung des Attestierungstokens (122) und eines gegebenen Anhangselements (124) für den gegebenen Empfänger, umfassend:
Verifizieren, durch die Empfängervorrichtung, von Integrität des gegebenen Anhangselements (124), umfassend Bestimmen, basierend auf der Bindung des gegebenen Anhangselements (124), dass das Anhangselement (124) an das Attestierungstoken (122) gebunden ist; und
Verifizieren, durch die Empfängervorrichtung, von Integrität des Attestierungstokens (122), umfassend Bestimmen, basierend auf dem Datensatz (126), dass die digitale Signatur (128) gültig ist; und
Reagieren auf die Kommunikation als Reaktion auf das Verifizieren der Integrität der Kommunikation.

2. Computerimplementiertes Verfahren nach Anspruch 1, wobei:
die Bindung einen Hash-Wert der digitalen Signatur (128) umfasst, der unter Verwendung einer kryptografischen Hash-Funktion und der digitalen Signatur (128) des Attestierungstokens (122) berechnet wird; und
das Verifizieren des gegebenen Anhangselements Folgendes umfasst:
Berechnen eines Verifizierungs-Hash-Wertes unter Verwendung der kryptografischen Hash-Funktion und der digitalen Signatur (128) des Attestierungstokens (122); und
Bestimmen, dass der Verifizierungs-Hash-Wert mit dem Hash-Wert der Bindung übereinstimmt.

3. Computerimplementiertes Verfahren nach Anspruch 1, wobei:
die Bindung einen Hash-Wert des Attestierungstokens (122) umfasst, der unter Verwendung einer kryptografischen Hash-Funktion und des Attestierungstokens (122) berechnet wird; und
das Verifizieren des gegebenen Anhangselements (124) Folgendes umfasst:
Berechnen eines Verifizierungs-Hash-Wertes unter Verwendung der kryptografischen Hash-Funktion und des Attestierungstokens (122); und
Bestimmen, dass der Verifizierungs-Hash-Wert mit dem Hash-Wert der Bindung übereinstimmt.

4. Computerimplementiertes Verfahren nach Anspruch 1, wobei das gegebene Anhangselement (124) ferner einen Ressourcen-Locator für den gegebenen Empfänger und eine digitale Signatur des Anhangselements umfasst, die unter Verwendung (i) eines privaten Schlüssels der Client-Vorrichtung (110) und (ii) einer Kombination aus der Bindung des gegebenen Anhangselements (124), den Empfängerdaten des gegebenen Anhangselements (124) und dem Ressourcen-Locator erzeugt wird.

5. Computerimplementiertes Verfahren nach einem vorhergehenden Anspruch, wobei das Verifizieren des gegebenen Anhangselements (124) Verifizieren der digitalen Signatur des Anhangselements unter Verwendung eines öffentlichen Schlüssels, der dem privaten Schlüssel entspricht, und der Kombination der Bindung des gegebenen Anhangselements (124), der Empfängerdaten des gegebenen Anhangelements (124) und dem Ressourcen-Locator umfasst.

6. Computerimplementiertes Verfahren nach einem vorhergehenden Anspruch, wobei die Empfängerdaten für jeden Empfänger durch eine Softwarekomponente des Empfängers verschlüsselt werden, die in einer Anwendung (112) enthalten ist, die auf der Client-Vorrichtung (110) läuft.

7. Computerimplementiertes Verfahren nach einem vorhergehenden Anspruch, wobei:
das Attestierungstoken (122) einen Token-Erstellungszeitstempel umfasst, der eine Zeit angibt, zu der das Attestierungstoken (122) erstellt wurde; und
das Verifizieren der Integrität des Attestierungstokens (122) Bestimmen umfasst, dass die Zeit, zu der die Attestierung erstellt wurde, innerhalb einer Schwellendauer einer Zeit ist, zu der die Kommunikation empfangen wurde.

8. Computerimplementiertes Verfahren nach einem vorhergehenden Anspruch, wobei:
das Attestierungstoken (122) einen öffentlichen Schlüssel der Client-Vorrichtung (110) umfasst;
die digitale Signatur unter Verwendung eines privaten Schlüssels der Client-Vorrichtung (110) erzeugt wird, der dem öffentlichen Schlüssel der Client-Vorrichtung (110) entspricht; und
das Bestimmen, dass die digitale Signatur gültig ist, Verifizieren der digitalen Signatur unter Verwendung des öffentlichen Schlüssels und des Datensatzes (126) umfasst.

9. Computerimplementiertes Verfahren nach einem vorhergehenden Anspruch, wobei:
der Datensatz (126) ferner ein Integritätstoken umfasst, das ein Urteil umfasst, das angibt, ob die Client-Vorrichtung (110) oder eine Anwendung (112), die auf der Client-Vorrichtung (110) läuft, vertrauenswürdig ist; und
das Verifizieren des Attestierungstokens (122) ferner Bestimmen umfasst, dass das Urteil angibt, dass die Client-Vorrichtung (110) oder die Anwendung (112), die auf der Client-Vorrichtung (110) läuft, vertrauenswürdig ist.

10. Computerimplementiertes Verfahren nach Anspruch 1, wobei die Empfängervorrichtung nur das Anhangselement (124) für den gegebenen Empfänger empfängt.

11. System (600), umfassend:
einen oder mehrere Prozessoren (610); und
eine oder mehrere Speichervorrichtungen (630), die Anweisungen speichern, die, wenn sie durch den einen oder die mehreren Prozessoren (610) ausgeführt werden, den einen oder die mehreren Prozessoren (610) veranlassen, das Verfahren nach einem vorhergehenden Anspruch durchzuführen.

12. Computerlesbares Speichermedium, das Anweisungen trägt, die, wenn sie durch einen oder mehrere Prozessoren (610) ausgeführt werden, den einen oder die mehreren Prozessoren (610) veranlassen, das Verfahren nach einem der Ansprüche 1 bis 10 durchzuführen.

13. Computerprogrammprodukt, das Anweisungen umfasst, die, wenn sie durch einen Computer ausgeführt werden, den Computer veranlassen, die Schritte des Verfahrens nach einem der Ansprüche 1 bis 10 durchzuführen.

## Revendications

1. Procédé implémenté par ordinateur comprenant :
la réception, par un dispositif destinataire d'un destinataire donné et en provenance d'un dispositif client (110), d'une communication (120) comprenant un jeton d'attestation (122) et un ou plusieurs éléments de rattachement (124) :
ledit jeton d'attestation (122) comprenant :
un ensemble de données (126) ; et
une signature numérique (128) de l'ensemble de données (126) ; et
chaque élément de rattachement (124) comprenant :
des données de destinataire pour un destinataire respectif de la communication ; et
une liaison qui lie de manière cryptographique l'élément de rattachement (124) au jeton d'attestation (122) ;
la vérification, par le dispositif destinataire, de l'intégrité de la communication à l'aide du jeton d'attestation (122) et d'un élément de rattachement donné (124) pour le destinataire donné, comprenant :
la vérification, par le dispositif destinataire, de l'intégrité de l'élément de rattachement donné (124), comprenant la détermination, sur la base de la liaison de l'élément de rattachement donné (124), que l'élément de rattachement (124) est lié au jeton d'attestation (122) ; et
la vérification, par le dispositif destinataire, de l'intégrité du jeton d'attestation (122) comprenant la détermination, sur la base de l'ensemble de données (126), que la signature numérique (128) est valide ; et
la réponse à la communication en réponse à la vérification de l'intégrité de la communication.

2. Procédé implémenté par ordinateur selon la revendication 1 :
ladite liaison comprenant une valeur de hachage de la signature numérique (128) calculée à l'aide d'une fonction de hachage cryptographique et de la signature numérique (128) du jeton d'attestation (122) ; et
ladite vérification de l'élément de rattachement donné comprenant :
le calcul d'une valeur de hachage de vérification à l'aide de la fonction de hachage cryptographique et de la signature numérique (128) du jeton d'attestation (122) ; et
la détermination que la valeur de hachage de vérification correspond à la valeur de hachage de la liaison.

3. Procédé implémenté par ordinateur selon la revendication 1 :
ladite liaison comprenant une valeur de hachage du jeton d'attestation (122) calculée à l'aide d'une fonction de hachage cryptographique et du jeton d'attestation (122) ; et
ladite vérification de l'élément de rattachement donné (124) comprenant :
le calcul d'une valeur de hachage de vérification à l'aide de la fonction de hachage cryptographique et du jeton d'attestation (122) ; et
la détermination que la valeur de hachage de vérification correspond à la valeur de hachage de la liaison.

4. Procédé implémenté par ordinateur selon la revendication 1, ledit élément de rattachement donné (124) comprenant en outre un localisateur de ressources pour le destinataire donné et une signature numérique d'élément de rattachement générée à l'aide (i) d'une clé privée du dispositif client (110) et (ii) d'une combinaison de la liaison de l'élément de rattachement donné (124), des données de destinataire de l'élément de rattachement donné (124) et du localisateur de ressources.

5. Procédé implémenté par ordinateur selon l'une quelconque des revendications précédentes, ladite vérification de l'élément de rattachement donné (124) comprenant la vérification de la signature numérique de l'élément de rattachement à l'aide d'une clé publique correspondant à la clé privée et la combinaison de la liaison de l'élément de rattachement donné (124), des données de destinataire de l'élément de rattachement donné (124) et du localisateur de ressources.

6. Procédé implémenté par ordinateur selon l'une quelconque des revendications précédentes, lesdites données de destinataire pour chaque destinataire étant cryptées par un composant logiciel du destinataire inclus dans une application (112) s'exécutant sur le dispositif client (110).

7. Procédé implémenté par ordinateur selon l'une quelconque des revendications précédentes :
ledit jeton d'attestation (122) comprenant un horodatage de création de jeton indiquant le moment auquel le jeton d'attestation (122) a été créé ; et
ladite vérification de l'intégrité du jeton d'attestation (122) comprenant la détermination que le moment auquel l'attestation a été créée se trouve dans une durée seuil par rapport au moment auquel la communication a été reçue.

8. Procédé implémenté par ordinateur selon l'une quelconque des revendications précédentes :
ledit jeton d'attestation (122) comprenant une clé publique du dispositif client (110) ;
ladite signature numérique étant générée à l'aide d'une clé privée du dispositif client (110) qui correspond à la clé publique du dispositif client (110) ; et
ladite détermination que la signature numérique est valide comprenant la vérification de la signature numérique à l'aide de la clé publique et de l'ensemble de données (126).

9. Procédé implémenté par ordinateur selon l'une quelconque des revendications précédentes :
ledit ensemble de données (126) comprenant en outre un jeton d'intégrité comprenant un verdict indiquant si le dispositif client (110) ou une application (112) s'exécutant sur le dispositif client (110) est de confiance ; et
ladite vérification du jeton d'attestation (122) comprenant en outre la détermination que le verdict indique que le dispositif client (110) ou l'application (112) s'exécutant sur le dispositif client (110) est de confiance.

10. Procédé implémenté par ordinateur selon la revendication 1, ledit dispositif destinataire recevant uniquement l'élément de rattachement (124) pour le destinataire donné.

11. Système (600) comprenant :
un ou plusieurs processeurs (610) ; et
un ou plusieurs dispositifs de stockage (630) stockant des instructions qui, lorsqu'elles sont exécutées par lesdits un ou plusieurs processeurs (610), amènent lesdits un ou plusieurs processeurs (610) à effectuer le procédé selon l'une quelconque des revendications précédentes.

12. Support de stockage lisible par ordinateur comportant des instructions qui, lorsqu'elles sont exécutées par un ou plusieurs processeurs (610), amènent lesdits un ou plusieurs processeurs (610) à effectuer le procédé selon l'une quelconque des revendications 1 à 10.

13. Produit-programme informatique comprenant des instructions qui, lorsqu'elles sont exécutées par un ordinateur, amènent l'ordinateur à effectuer les étapes du procédé selon l'une quelconque des revendications 1 à 10.
